# DEMANDE DE BREVET EUROPEEN

(11) **EP 0 526 283 A1**
(43) Date de publication de la demande: **03.02.1993**
(21) Numéro de dépôt: 92401907.8
(22) Date de dépôt: 03.07.1992
(51) Int. Cl.: G02B 7/28, G02B 7/34, G02B 13/14

(54) **Dispositif de projection optique à mise au point réglable**

(30) Priorité: 23.07.1991 FR 9109278
(71) Demandeur: THOMSON-CSF, 75008 Paris (FR)
(72) Inventeur: Dez, Olivier Robert, F-92045 Paris la Défense (FR); Vilbois, Vincent, F-92045 Paris la Défense (FR)
(74) Mandataire: Lincot, Georges

(57) **Abrégé**

L'invention a pour objet un dispositif de projection optique multivoie destiné, en particulier, à la mise au point d'au moins un plan de focalisation sur un détecteur.

Le dispositif selon une forme de réalisation comporte un moyen de focalisation (2) et un moyen de renvoi optique (CS2) d'un faisceau F1 pour projeter ce faisceau sur un plan de focalisation (PF). Le dioptre de sortie (8) du moyen de division (CS2) est incliné de manière non orthogonale par rapport à l'axe optique OX, et coopère avec la face 1 d'entrée (9) de même inclinaison d'un prisme (7), entraîné en translation parallèlement au dioptre (8) grâce à un moteur (M). La position (PF3, PF4) du plan de focalisation (PF) est ajustée sur un détecteur (5) par un déplacement adapté du prisme (7).

Application aux systèmes d'imagerie à voies optiques multiples, aux systèmes de coudage optique.

## Description

L'invention concerne le domaine de l'imagerie optique et, plus précisément, la mise au point optique dans les systèmes d'imagerie particulièrement sensibles aux variations thermiques.

L'objet de l'invention est un dispositif de projection optique à mise au point réglable comportant au moins un élément optique de renvoi. De tels dispositifs de projection peuvent intervenir dans les systèmes d'imagerie optique notamment pour focaliser un faisceau lumineux sur au moins un détecteur dans un système d'imagerie multivoie, ou pour redresser une image, ou pour former un coudage optique.

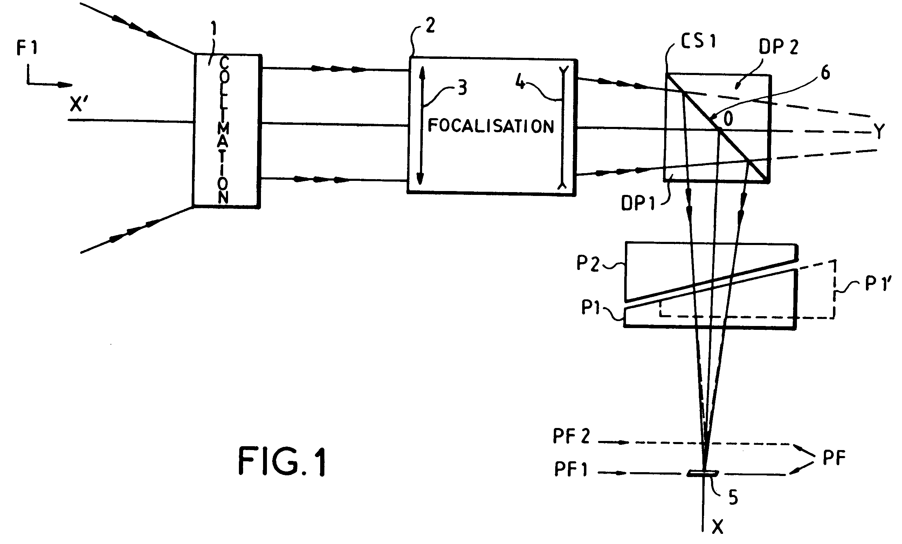

Un exemple de dispositif de projection optique appliqué à un système d'imagerie multivoie est illustré par le schéma de la figure 1. Il comporte classiquement un groupe optique de collimation 1, un moyen de focalisation 2, par exemple un téléobjectif symbolisé par deux lentilles 3 et 4, et un élément de renvoi optique à réflexion partielle tel qu'un cube séparateur CS1. Après collimation à travers le groupe optique 1, un faisceau lumineux incident F1 est collimaté et rendu convergent par passage à travers le moyen de focalisation 3, puis est dévié partiellement par réflexion sélective au niveau du cube CS1. La réflexion sélective permet de sélectionner un domaine spectral particulier, par exemple le domaine infrarouge. Le faisceau F1 dévié est ensuite projeté sur un détecteur d'imagerie 5 disposé dans le plan de focalisation PF du dispositif de projection.

Le problème soulevé est celui de la correction de la défocalisation provoquée par les variations de température. En effet, les matériaux optiques utilisés ont un indice qui varie en fonction de la température, en particulier le germanium qui est le matériau habituellement utilisé en optique infrarouge. Afin de supprimer cette défocalisation notamment dans les systèmes d'imagerie multivoie, des méthodes passives et actives de compensation ont été développées :
- les méthodes passives consistent en une athermalisation soit de type optique soit de type mécanique. L'athermalisation optique est réalisée en remplaçant, dans une combinaison optique, les éléments constitués d'un même matériau, par exemple le germanium, par des éléments constitués d'une séquence de matériaux compensant ou minimisant les défocalisations thermiques, par exemple du sulfure de zinc, du séliniure de zinc, de l'arséniure de gallium. L'athermalisation mécanique est réalisée par des cales ayant un coefficient de dilatation différent de la structure commune. Les coefficients de dilatation et la longueur de ces cales sont choisis de manière à provoquer des translations compensatrices de lentilles. La méthode optique nécessite plus de dioptres à traverser, donc une moins bonne transmission, et les méthodes mécaniques n'autorisent que des déplacements du plan de focalisation souvent insuffisants, surtout en infrarouge.
- une méthode active consiste à déplacer axialement une lentille, ou un groupe de lentilles, supplémentaire. Cette méthode nécessite des précisions de positionnement très importantes. Une autre méthode active, illustrée sur la figure 1, utilise, sur le faisceau convergent formé par le dispositif de projection optique et émergeant de l'élément de renvoi CS1, un premier prisme mobile P1 associé à un second prisme P2 pour former une lame à faces planes et parallèles, d'épaisseur variable. Par exemple, lorsque P1 passe de la position représentée en traits pleins à celle P1 représentée en traits pointillés, le plan de focalisation PF du dispositif de projection est translaté de la position PF1 à la position PF2 du fait de la variation d'épaisseur de prisme traversée par un faisceau convergent. Cette méthode nécessite moins de précision de positionnement que la méthode précédente, mais elle introduit quatre dioptres supplémentaires.

Afin de pallier les inconvénients mentionnés, l'invention se propose de mettre en oeuvre un dispositif de mise au point optique comportant des éléments de réglage nécessitant peu de précision de positionnement, sans multiplier le nombre de dioptres supplémentaires à traverser.

Pour atteindre ces objectifs, l'invention fait coopérer directement une face de l'élément optique de renvoi et une face d'un prisme mobile de telle sorte que l'épaisseur traversée globalement puisse varier pour régler la position du plan de focalisation.

Plus précisément, le dispositif de projection optique selon l'invention, comportant un moyen de focalisation d'un faisceau lumineux incident et un moyen de renvoi optique de ce faisceau lumineux pour le projeter faisceau sur au moins un plan de focalisation disposé perpendiculairement à un axe optique correspondant, est caractérisé en ce que le moyen de renvoi présente au moins un dioptre incliné non orthogonalement à l'axe optique, en ce que ce dioptre coopère avec une face du prisme de réglage de mise au point associé en ce sens que la face du prisme est parallèle au dioptre et qu'il est prévu des moyens pour déplacer le prisme en translation parallèlement au dioptre, l'amplitude du déplacement du prisme de réglage faisant varier la position du plan de focalisation jusqu'à ce que le plan de focalisation vienne en coïncidence avec une position prédéterminée.

Selon un premier mode de réalisation, le dispositif de projection optique, selon l'invention, est appliqué à la mise au point sur un détecteur de système d'imagerie.

Selon deux variantes de réalisation, le dispositif selon l'invention est adapté, pour s'appliquer respectivement à la mise au point commune et indépendante sur plusieurs détecteurs d'un système d'imagerie multivoie. D'autres caractéristiques et avantages apparaîtront ci-après à la lecture de la description détaillée d'un mode de réalisation faite en référence aux dessins annexés qui représentent, respectivement :
- la figure 1, le schéma synoptique d'un dispositif illustrant l'art antérieur (déjà commenté) ;
- la figure 2, le schéma synoptique d'un mode de réalisation du dispositif de projection selon l'invention ;
- la figure 3, une première variante du dispositif selon l'invention ;
- la figure 4, une seconde variante du dispositif selon l'invention.

Le mode de réalisation de l'invention décrit ci-après concerne les systèmes d'imagerie multivoie. Un système d'imagerie multivoie utilise un cube séparateur de voies pour former plusieurs images d'une même scène observée, ces images appartenant à des domaines spectraux différents. Un tel système d'imagerie se trouve, par exemple, dans les caméras thermiques bispectrales destinées à former des images de contraste élevé.

Un cube séparateur de voies optiques, tel que le cube CS1 de la figure 1, est formé classiquement de deux demi-prismes DP1 et DP2 réunis par une couche de traitement dichroïque 6. Cette couche assure la réflexion sélective du faisceau principal F1 dans un domaine spectral déterminé et transmet le rayonnement appartenant à un domaine spectral complémentaire. Afin d'augmenter la sélectivité de la réflexion, la couche 6 peut être recouverte de couches minces en matériau diélectrique (non représentées).

Selon l'invention, l'une au moins des faces de sortie du cube séparateur est configurée de façon à pouvoir coopérer avec un élément optique de configuration complémentaire.

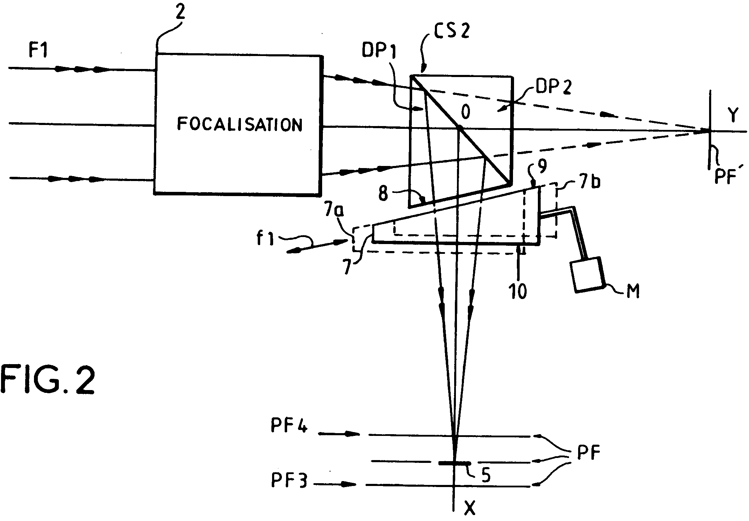

Sur la figure 2, qui illustre un premier mode de réalisation du dispositif selon l'invention appliqué au réglage de la mise au point d'une seule voie optique ayant un axe optique X′OX, les éléments identiques à ceux représentés sur la figure 1 conservent les mêmes références. Le dispositif de projection optique schématisé sur la figure 2 comporte le moyen de focalisation 2, un cube séparateur de voies CS2, un prisme 7, et un détecteur d'imagerie, par exemple le détecteur d'imagerie infrarouge 5. La face de sortie 8 du demi-prisme de la voie à compenser, DP1 sur la figure 2, forme un dioptre plan incliné par rapport à l'axe optique OX. La face d'entrée 9 du prisme 7 présente une même inclinaison et est disposée parallèlement au dioptre de sortie 8 du demi-prisme associé DP1. La face de sortie 10 du prisme 7 est orthogonale à l'axe optique OX afin d'éviter toute déviation latérale du faisceau par rapport à l'axe optique.

Comme pour le système de projection multivoies illustré à la figure 1, le faisceau principal convergent F1 est partiellement réfléchi sur la voie d'axe OX et partiellement transmis sur la voie d'axe OY en traversant le cube séparateur, le faisceau étant projeté sur le détecteur 5.

Le prisme 7 peut se déplacer en translation, selon la double flèche f1, grâce à un entraînement motorisé assuré par couplage du prisme 7 à un moteur (M). Cette translation se fait parallèlement au dioptre de sortie 8. Dans ces conditions, l'épaisseur de prisme traversée par le faisceau convgergent F1 varie et, en conséquence, par application des lois de la réfraction, la position du plan de focalisation PF de la voie optique d'axe X′OX varie également. Ce plan de focalisation passe d'une position extrême PF3 à une position extrême PF4 lorsque le prisme 7 passe de la position représentée en traits pointillés 7a à celle représentée en traits pointillés 7b. Pour obtenir une focalisation correcte, il suffit de déplacer le prisme 7 d'une amplitude telle que la position du plan de focalisation vienne en coïncidence avec le plan du détecteur 5.

Bien entendu, le dioptre incliné est le dioptre de sortie du demi-prisme DP2 lorsque la voie à compenser est la voie de transmission OY ayant un plan de focalisation PF′.

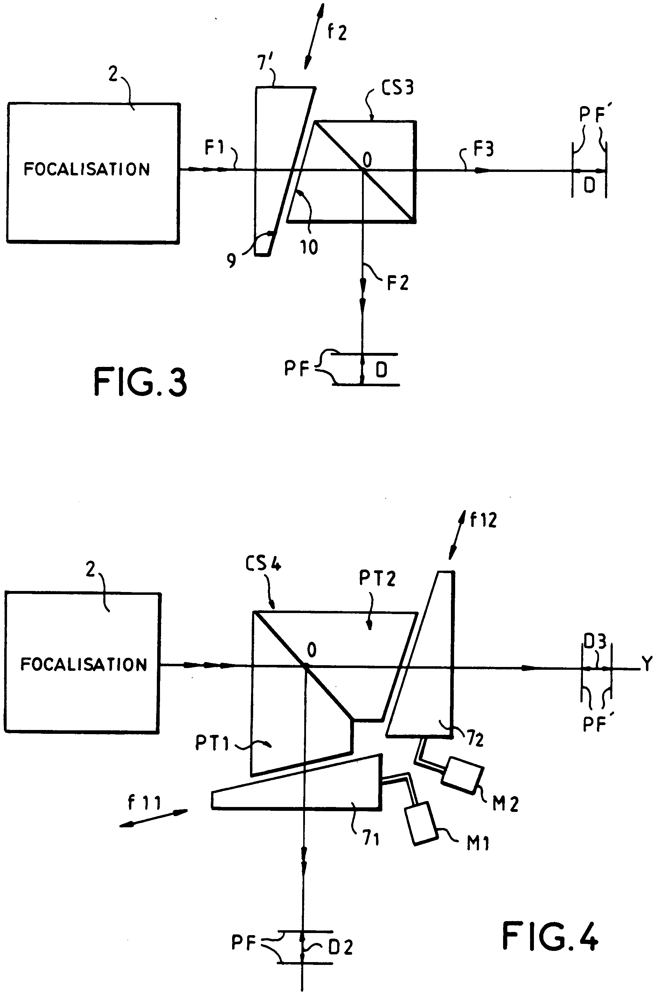

La figure 3 présente une variante du mode de réalisation précédent permettant de faire une mise au point commune pour les deux voies optiques de réflexion et de transmission. Selon cette variante, le faisceau F1 émergeant du téléobjectif TO vient frapper en premier un prisme 7′, identique au prisme 7, avant d'être partiellement réfléchi et transmis selon deux faisceaux secondaires F2 et F3 grâce à un cube séparateur CS3 dont le dioptre d'entrée 10 est incliné et est parallèle à la face de sortie du prisme 7′. Un déplacement du prisme 7′ selon la flèche f2, provoque une même variation d'épaisseur de prisme traversée pour chacun des deux faisceaux F2 et F3, composantes du F1 avant leur séparation. Cette variation d'épaisseur traversée provoque donc un déplacement simultané et de même amplitude D de chacun des plans de focalisation PF et PF′ de chaque voie optique secondaire.

Une autre variante, illustrée sur la figure 4, autorise une mise au point séparée pour chaque voie optique secondaire. Le cube séparateur CS4 est formé de deux demi-prismes à section trapézoïdale, PT1 et PT2, associés respectivement à des prismes 71 et 72 disposés sur les voies de réflexion et de transmission d'axes OX et OY. Chacun des prismes 71 et 72 est identique au prisme 7 précédemment décrit et coopère avec le dioptre de sortie d'un demi-prisme, respectivement PT1 et PT2. Une translation indépendante des prismes 71 et 72, commandée par deux moteurs indépendants M1 et M2 selon des directions matérialisées par les flèches f11 et f12 sur la figure 4, provoque des déplacements indépendants D2 et D3 des plans de focalisation des voies optiques secondaires PF et PF′.

L'invention n'est pas limitée aux modes de réalisation décrits et représentés. Par exemple, dans un système d'imagerie multivoie, une des voies de détection du système d'imagerie peut également servir de voie d'émission laser. D'autre part, la forme des prismes ou de l'élément de renvoi mis en oeuvre doit être adaptée par l'Homme du Métier afin de se conformer aux exigences stériques : trapézoïdale, polygônale, tétraédrique, .... Par exemple, lorsqu'il s'agit de couder un faisceau optique ou redresser une image, l'élément de renvoi optique peut être constitué par un prisme dont une face est rendue totalement réfléchissante par tout moyen connu.

## Revendications

**1 -** Dispositif de projection optique, comportant un moyen de focalisation (2) d'un faisceau lumineux incident (F1) et un moyen de renvoi optique de ce faisceau lumineux (F1) pour projeter le faisceau F1 sur au moins un plan de focalisation (PF, PF′) disposé perpendiculairement à un axe optique correspondant (OX, OY), caractérisé en ce que le moyen de renvoi (CS2, CS3, CS4) présente au moins un dioptre incliné (8, 10) non orthogonal à l'axe optique (OX), en ce que ce dioptre (8,10) coopère avec une face (9) d'un prisme de réglage de mise au point associé (7, 7′, 71, 72) en ce sens que la face (9) du prisme est parallèle au dioptre (8, 10) et qu'il est prévu des moyens (M, M1, M2) pour déplacer le prisme (7, 7′, 71, 72) en translation parallèlement au dioptre (8), l'amplitude du déplacement du prisme de réglage faisant varier la position du plan de focalisation (PF, PF′, jusqu'à ce que ce plan de focalisation vienne en coïncidence avec une position prédéterminée.

**2.** Dispositif de projection optique selon la revendication 1 appliqué à la mise au point de l'une de voies de détection d'un système d'imagerie, caractérisé en ce que le moyen de division (CS2) est un cube séparateur de faisceaux constitué de deux demi-prismes (DP1, DP2) réunis par une couche de traitement dichroïque (6), en ce que le dioptre incliné (8) est le dioptre de sortie d'un des demis-prismes (DP1, DP2) du cube séparateur (CS2) et en ce que la face inclinée (9) est la face d'entrée du prisme (7) associé au dioptre de sortie correspondant du cube séparateur (CS2).

**3.** Dispositif de projection optique multivoie selon la revendication 1 appliqué à la mise au point commune de deux voies de détection d'un système d'imagerie, caractérisé en ce que le moyen de division (CS3) est un cube séparateur de faisceaux constitué de deux demi-prismes (DP1, DP2) réunis par une couche de traitement dichroïque (6), et en ce que le dioptre incliné (8) est le dioptre d'entrée du cube séparateur (CS3) et la face inclinée (9) est la face de sortie du prisme (7′) associé au dioptre d'entrée du cube séparateur (CS2).

**4.** Dispositif de projection optique multivoie selon la revendication 1 appliqué à la mise au point indépendante de deux voies de détection d'un système d'imagerie, caractérisé en ce que le moyen de division (CS4) est formé de deux demi-prismes à section trapézoïdale (PT1, PT2) réunis par une couche de traitement dichroïque (6), en ce que le dioptre incliné (8) est le dioptre de sortie de chacun du demi-prisme (PT1, PT2) du cube séparateur (CS4) et en ce que la face inclinée (10) est la face d'entrée d'un des prismes (71, 72) associé respectivement à chacun des demi-prismes (PT1, PT2 ).

**5.** Dispositif de projection optique selon l'une des revendications précédentes appliqué à un système d'imagerie comportant deux voies de détection équipées chacune d'un détecteur d'imagerie (5), caractérisé en ce que la position d'un au moins des plans de focalisation (PF, PF′) coïncide avec le plan du détecteur d'imagerie (5) par réglage de la position du prisme (7, 7′, 71, 72) à l'aide des moyens de déplacement correspondants (M, M1, M2 ).

**6.** Dispositif de projection optique selon la revendication 1 appliqué à un système optique de coudage de faisceau, caractérisé en ce que le moyen de renvoi est un prisme à réflexion totale.
